# EUROPÄISCHE PATENTSCHRIFT

(11) **EP 3 535 042 B1**
(45) Veröffentlichungstag und Bekanntmachung des Hinweises auf die Patenterteilung: **24.04.2024**
(21) Anmeldenummer: 17792049.3
(22) Anmeldetag: 30.10.2017
(51) Int. Cl.: B01D 39/06, C02F 1/00, C02F 1/28, B01D 24/00, B01J 20/28

(54) **FILTERVORRICHTUNG**
FILTER DEVICE
DISPOSITIF DE FILTRATION

(30) Priorität: 02.11.2016 DE 102016120877
(43) Veröffentlichungstag der Anmeldung: 11.09.2019
(73) Patentinhaber: Niederer Schneider AG, 8500 Frauenfeld (CH)
(72) Erfinder: NIEDERER, Simeon, 8500 Frauenfeld (CH); ROESKE, Frank Valentin, 10961 Berlin (DE)
(74) Vertreter: Uexküll & Stolberg
(86) Internationale Anmeldenummer: PCT/EP2017/077775
(87) Internationale Veröffentlichungsnummer: WO 2018/083063

(56) Entgegenhaltungen:
- WO-A1-2004/099351
- JP-A- 2000 061 245
- KR-A- 20040 082 807
- US-A- 4 853 004
- US-A- 5 366 632
- US-A1- 2012 171 752
- US-A1- 2013 341 278
- US-A1- 2015 367 058

## Beschreibung

Die Erfindung betrifft eine Filtervorrichtung, wie sie zum Beispiel zum Reduzieren von unerwünschten Verbindungen in Flüssigkeiten verwendet werden kann (z.B. von Phosphaten in Teichen, Naturbädern, Springbrunnen und Kreislaufbrunnen), aber auch z.B. im Zusammenhang mit Galvanikbädern.

Die DE 103 27 199 A1 beschreibt, wie Phosphorverbindungen aus Wässern entfernt werden können, indem sie mit einem anionischen Polymer in Kontakt gebracht werden.

Die US 2012/171752 A1 beschreibt eine Festbettsäule mit einem Sorptionsmittel zur Abscheidung von CO₂ aus einem Gasstrom. Bei dem Sorptionsmittel kann es sich um aminofunktionalisierte Glaskugeln handeln, die sich in einem mittleren Abschnitt der Festbettsäule zwischen einem oberen und unteren Abschnitt aus Glaskugeln befinden.

Ein mehrlagiger Filter mit einem Filtermedium und stromaufwärts davon angeordneten Mikroperlen aus Glas als Filterhilfe ist in der US 5 366 632 offenbart.

Ferner sind Filterpatronen bekannt, bei denen nacheinander ein mit Glaskugeln gefüllter Einlassabschnitt, ein mit Schadstoffe adsorbierenden Granulatkörnern unterschiedlicher Größe gefüllter Adsorptionsabschnitt und ein mit Glasperlen gefüllter Auslassabschnitt von zu reinigenden Wässern durchströmt werden.

Derartige Filtervorrichtungen neigen zu einem relativ hohen Strömungswiderstand, was die Filterleistung reduziert und zu höheren Kosten führen kann.

Es ist Aufgabe der Erfindung, eine verbesserte Filtervorrichtung mit gutem Durchflussverhalten zu schaffen.

Diese Aufgabe wird gelöst durch eine Filtervorrichtung mit den Merkmalen des Anspruchs 1. Vorteilhafte Ausgestaltungen der Erfindung ergeben sich aus den Unteransprüchen.

Die erfindungsgemäße Filtervorrichtung hat einen Einlass, einen Auslass und einen Strömungsweg zwischen dem Einlass und dem Auslass. Der Strömungsweg weist, in Strömungsrichtung gesehen, einen ersten Abschnitt (Einlassabschnitt), einen zweiten Abschnitt (Adsorptionsabschnitt) und einen dritten Abschnitt (Auslassabschnitt) auf, d.h. das durch den Einlass eintretende Medium durchströmt zuerst den ersten Abschnitt, dann den zweiten Abschnitt und danach den dritten Abschnitt und tritt durch den Auslass aus der Filtervorrichtung aus. Der erste Abschnitt enthält Glaskugeln, der zweite Abschnitt enthält ein Gemisch mit Glaskugeln und einem Adsorptionsgranulat, und der dritte Abschnitt enthält Glaskugeln.

Wenn ein mit Schadstoffen beladenes Medium (z.B. unerwüschtes Phosphat enthaltendes Wasser) durch die Filtervorrichtung und an den Granulatkörnern vorbei strömt, können Schadstoffe von den Granulatkörnern adsorbiert werden. Der Begriff "Adsorption" ist hier ganz allgemein zu verstehen; darunter fällt auch Chemisorption. Je nach Verwendungszweck geeignete Adsorptionsgranulate, z.B. zum Adsorbieren von Phosphaten, sind bekannt und können für die im Einzelfall geplante Verwendung der Filtervorrichtung ausgesucht werden.

Das Wort "Filtervorrichtung" ist allgemein zu verstehen und soll nicht implizieren, dass mit der erfindungsgemäßen Filtervorrichtung Feststoffe abfiltriert werden müssen. Der Effekt der Filtervorrichtung beruht primär auf der Adsorption von unerwünschten Stoffen am oder im Adsorptionsgranulat. Bei Bedarf können aber z.B. geeignete Feststofffilter vorgeschaltet werden. Im Prinzip könnte auch die durch die Füllung der Filtervorrichtung implizit vorhandene mechanische Filterwirkung genutzt werden, was aber zu einer Verringerung der Standzeit der Filtervorrichtung führen könnte.

Der erste Abschnitt der erfindungsgemäßen Filtervorrichtung enthält ausschließlich Glaskugeln. Der zweite Abschnitt enthält vorzugsweise ausschließlich eine Mischung aus Glaskugeln und einem Adsorptionsgranulat. Der dritte Abschnitt enthält ausschließlich Glaskugeln. Trotz Verwendung des Begriffs "ausschließlich" können daneben jedoch auch unvermeidbare Verunreinigungen vorkommen oder z.B. Abrieb von den Granulatkörnern aus dem zweiten Abschnitt, der in den ersten oder dritten Abschnitt gelangen könnte.

Bei bevorzugten Ausführungsformen der Erfindung sind der erste Abschnitt und der dritte Abschnitt mit Glaskugeln gefüllt, deren Nenndurchmesser mindestens so groß ist wie der Nenndurchmesser der größten Glaskugeln in dem zweiten Abschnitt. Vorzugsweise haben die Glaskugeln in dem zweiten Abschnitt alle den gleichen Nenndurchmesser.

Hier wird für den Durchmesser der Glaskugeln der Begriff Nenndurchmesser verwendet, weil Glaskugeln herstellungsbedingt in der Größe etwas variieren können. Ein typischer Toleranzbereich für den Durchmesser bei gegebenem Nenndurchmesser ist zum Beispiel eine Abweichung ± 5% oder von ± 10% vom Nenndurchmesser. Glaskugeln können auch unter Angabe eines vorgegebenen Durchmesserbereichs vermarktet werden, der sich z.B. über 1 mm Breite erstreckt. In diesem Fall kann der Nenndurchmesser eine geeignete Zahlenangabe (nicht notwendig der Mittelwert des Durchmesserbereichs) sein, die diesen Durchmesserbereich charakterisiert. Wenn Glaskugeln nach Fraktionen vermarktet werden, können sich Glaskugeln mit dem gleichen Nenndurchmesser in der gleichen Fraktion befinden.

Vorzugsweise grenzt der zweite Abschnitt an den ersten Abschnitt an, und der dritte Abschnitt grenzt an den zweiten Abschnitt an. Dabei kann der erste Abschnitt an den Einlass und der Auslass an den dritten Abschnitt angrenzen. Das heißt, die Abschnitte folgen unmittelbar aufeinander. Zwischenbegrenzungen wie z.B. siebähnlich gestaltete Zwischenwände oder Einlagen zwischen den einzelnen Abschnitten können entfallen, sind aber grundsätzlich nicht ausgeschlossen.

Die Granulatkörner des Adsorptionsgranulats werden durch die Glaskugeln im zweiten Abschnitt quasi fixiert. Zwischen diesen Teilchen können viele Strömungskanäle gebildet werden, deren Querschnitt auch von dem Anteil an Granulatkörnern geringer Größe abhängt. Wenn die Korngröße über einen vorgegebenen Bereich variiert und ein nennenswerter Anteil an Granulatkörnern deutlich kleiner ist als die Glaskugeln, ist der Strömungswiderstand des zweiten Abschnitts größer, als wenn weniger von solchen kleinen Granulatkörnern vorhanden sind oder gar die Korngröße der Granulatkörner dem Nenndurchmesser der Glaskugeln entspricht. Andererseits steigt das Adsorptionsvermögen des zweiten Abschnitts mit der spezifischen Oberfläche der Granulatkörner, also mit wachsendem Anteil an kleinen Granulatkörnern. Mit dem Strömungswiderstand kann auch die Verweildauer des zu reinigenden Mediums in der Filtervorrichtung steigen, wodurch die Reinigung gründlicher wird. Der Fachmann wird eine Abstimmung der Körnung des Adsorptionsgranulats unter Abwägung dieser Gesichtspunkte für eine gegebene Anwendung vornehmen können. Glaskugeln sind in der Regel inert und relativ preiswert.

Größere Glaskugeln im ersten und im dritten Abschnitt bilden größere Strömungskanäle und erlauben eine gute Strömungsverteilung zum zweiten Abschnitt hin, so dass sich dessen Querschnittsfläche möglichst vollständig nutzen lässt, und vom zweiten Abschnitt weg, insbesondere wenn die Anschlüsse für den Einlass und den Auslass der Filtervorrichtung eine deutlich geringere Querschnittsfläche als die Filtervorrichtung haben. Diese Glaskugeln sind entweder nicht so groß, dass ein nennenswerter Anteil an Teilchen aus dem zweiten Abschnitt in die Zwischenräume zwischen den Glaskugeln im ersten und im dritten Abschnitt eindringen könnte, oder zumindest wird dadurch die Füllung der Filtervorrichtung als Ganzes stabilisiert, ohne dass Trennungen (wie z.B. Trennsiebe) zwischen den einzelnen Abschnitten erforderlich sind.

Der erste Abschnitt weist mindestens zwei mit Glaskugeln gefüllte Unterabschnitte auf, deren Nenndurchmesser in dem jeweiligen Unterabschnitt gleich groß ist, wobei der Nenndurchmesser der Glaskugeln der einzelnen Unterabschnitte in Richtung auf den Einlass zu ansteigt, und/oder der dritte Abschnitt weist mindestens zwei mit Glaskugeln gefüllte Unterabschnitte auf, deren Nenndurchmesser in dem jeweiligen Unterabschnitt gleich groß ist und wobei der Nenndurchmesser der Glaskugeln der einzelnen Unterabschnitte in Richtung auf den Auslass zu ansteigt. Ein mehrschichtiger Aufbau des ersten bzw. dritten Abschnitts ermöglicht eine bessere Anpassung der Einströmung bzw. Ausströmung, um bei relativ geringem Strömungswiderstand eine gleichmäßige Strömung durch den zweiten Abschnitt zu erreichen. Dabei wird auch die Verwendung von relativ großen Glaskugeln in der Nähe des Einlasses bzw. Auslasses erlaubt, was unmittelbar neben dem zweiten Abschnitt wegen der Möglichkeit einer Durchmischung der Glaskugeln bei stark unterschiedlichen Größen problematisch sein könnte.

Für die Korngrößenverteilung bei dem Adsorptionsgranulat und den Nenndurchmesser der Glaskugeln gibt es zahlreiche Möglichkeiten.

So kann zum Beispiel die Korngröße des Adsorptionsgranulats dem Nenndurchmesser der Glaskugeln in dem zweiten Abschnitt entsprechen. Da die Granulatkörner in der Regel nicht kugelförmig sind, sondern unregelmäßig geformt, müssen bei einer solchen Ausführungsform Granulatkörner ausgewählt werden, deren Größe zu der der Glaskugeln passt. Dies kann zum Beispiel durch ein Siebverfahren geschehen (siehe unten).

Bei anderen Ausführungsformen ist die Korngröße des Adsorptionsgranulats nach oben durch den (größten) Nenndurchmesser der Glaskugeln in dem zweiten Abschnitt begrenzt. Dabei werden also auch kleinere Granulatkörner verwendet. Die Korngröße des Adsorptionsgranulats kann aber nach oben auch nicht durch den Nenndurchmesser der Glaskugeln in dem zweiten Abschnitt begrenzt sein. Vorzugsweise ist eine untere Grenze in der Größe der Granulatkörner vorgesehen, die von der überwiegenden Zahl der Granulatkörner (z.B. 98 Gew.-% oder 99 Gew.-%) nicht unterschritten wird.

Wenn die Größe der Granulatkörner eine vorgegebene untere Grenze nicht unterschreitet, begrenzt dies die spezifische Oberfläche der Granulatkörner, und es bestehen innerhalb des zweiten Abschnitts Zwischenräume. Dies hat Auswirkungen auf das Adsorptionsverhalten (insbesondere wenn die Adsorption an der Oberfläche der Granulatkörner stattfindet) und den Strömungswiderstand, wie bereits weiter oben erläutert. Die kleinste Korngröße des Adsorptionsgranulats liegt vorzugsweise im Bereich von 0,05 mm oder 0,1 mm bis 2,0 mm, wobei auch jeder Zwischenwert ausgewählt sein kann. Eine geeignete Größenverteilung der Granulatkörner kann durch Versuche ermittelt werden, was für einen Fachmann nicht näher erläutert werden muss.

Der Nenndurchmesser der Glaskugeln im zweiten Abschnitt liegt vorzugsweise im Bereich von 0.1 mm bis 8 mm; während der Nenndurchmesser der Glaskugeln im ersten und im dritten Abschnitt vorzugsweise im Bereich von 0.2 mm bis 20 mm liegt.

Dies sind große Bereiche. Die Auswahl erfolgt im Einzelfall durch den Fachmann nach Kriterien wie einem gewünschten Durchfluss oder dem Adsorptionsverhalten. Größere Glaskugeln bilden größere Zwischenräume und können so einen geringeren Strömungswiderstand der Filtervorrichtung ermöglichen, was einen höheren Durchfluss bedeutet.

Die Korngröße des Adsorptionsgranulats (bzw. die Größenverteilung) kann durch Siebung festgelegt werden. Falls die Granulatkörner nicht größer als die Glaskugeln im zweiten Abschnitt sein sollen, kann dies zum Beispiel folgendermaßen erfolgen: Zunächst wird eine Siebgröße ausgewählt, bei der die gegebenen Glaskugeln für den zweiten Abschnitt gerade durch die Maschen passen. Diese Siebgröße wird dann zum Vorselektieren des Adsorptionsgranulats benutzt. Wenn die Korngröße dem Durchmesser der Glaskugeln entsprechen soll, werden anschließend die durchgefallenen Granulatkörner mit einer kleineren Siebgröße gesiebt, vorzugsweise der nächstkleineren in einer normgemäßen Siebreihe, und alle jetzt nicht durchfallenden Granulatkörner werden für den Adsorptionsabschnitt genommen. Andernfalls wird auch ein Teil der durchgefallenen Granulatkörner verwendet, oder es wird von vornherein mit stärker unterschiedlichen Siebgrößen gearbeitet, auch für den Fall, dass Granulatkörner größer sein können als der Nenndurchmesser der Glaskugeln im zweiten Abschnitt. Die Siebung (Siebanalyse) kann z.B. gemäß oder analog DIN 66165 erfolgen.

Bei vorteilhaften Ausführungsformen der Erfindung sind der erste Abschnitt, der zweite Abschnitt und der dritte Abschnitt verdichtet gefüllt, wobei deren Füllungen durch Begrenzungsmittel am Einlass und am Auslass in verdichtetem Zustand gehalten werden. "Verdichtet" heißt in diesem Zusammenhang, dass zwischen den Teilchen in den einzelnen Abschnitten keine Hohlräume mehr vorhanden sind, die sich durch Vibrationen nennenswert verringern lassen. Dies kann z.B. durch Schütteln des Gehäuses beim Befüllen der Filtervorrichtung erreicht werden. Es ist keine geometrisch dichteste Packung der Teilchen erforderlich, da eine Stabilisierung zum Vermeiden einer unerwünschten Durchmischung der Teilchen benachbarter Abschnitte schon vorher erreicht wird. Auch müssen die Begrenzungsmittel beim Betrieb der Filtervorrichtung nicht notwendig einen Druck ausüben. Die Begrenzungsmittel verhindern aber eine Bildung von (neuen) Hohlräumen, die zu einer Destabilisierung führen könnten.

Als Begrenzungsmittel kann z.B. eine am Einlass und/oder am Auslass der Filtervorrichtung vorgesehene Überwurfmutter mit einem Siebeinsatz dienen. Das Sieb kann gegebenenfalls beim Festdrehen der Überwurfmutter sogar einen Druck ausüben, wobei die Füllung etwas verdichtet wird, der sich aber bei Erreichen einer stabilen verdichteten Konfiguration auch wieder abbauen kann. Die Siebfläche steht vorzugsweise quer zur Längsachse der Überwurfmutter. Die Siebporen sind so klein, dass sie keine Glaskugeln durchlassen, und können daher durchaus relativ groß sein, um keinen nennenswerten Strömungswiderstand zu verursachen.

Die Länge des zweiten Abschnitts ist vorzugsweise größer als die Summe der Längen des ersten Abschnitts und des dritten Abschnitts, wobei die Längen in Richtung des Strömungswegs gemessen sind.

Bei vorteilhaften Ausführungsformen der Erfindung weist die Filtervorrichtung ein Gehäuse auf, an dem der Einlass und der Auslass angebracht sind. So kann das Gehäuse patronenartig mit zwei gegenüberliegenden Stirnseiten ausgestaltet ist, wobei an der einen Stirnseite der Einlass und an der anderen Stirnseite der Auslass angeordnet ist. Der Einlass und der Auslass haben vorzugsweise einen geringeren Querschnitt als das Gehäuse und sind z.B. mit Anschlussgewinden versehen. Es ist auch denkbar, dass der Einlass und/oder der Auslass quer zur Längsachse des Gehäuses angeordnet sind. Wenn das Gehäuse patronenartig gestaltet ist, kann sich im zentralen Bereich des Gehäuses der 2. Abschnitt (Adsorptionsabschnitt), in einem Bereich des Gehäuses zwischen dem Einlass und dem Adsorptionsabschnitt der 1. Abschnitt (Einlassabschnitt) und in einem Bereich des Gehäuses zwischen dem 2. Abschnitt und dem Auslass der 3. Abschnitt (Auslassabschnitt) befinden.

Zum Beispiel kann sich der Adsorptionsabschnitt über 2/3, der Einlassabschnitt über 1/6 und der Auslassabschnitt über 1/6 der Länge des Gehäuses erstrecken. 1/6 der Gehäuselänge reicht in der Regel für ein gutes Einströmen bzw. Ausströmen von Flüssigkeit in eine solche bzw. aus einer solchen Filterpatrone, und es wird keine unnötige Gehäuselänge verschenkt.

Für das Adsorptionsgranulat gibt es vielfältige Möglichkeiten. So kann das Adsorptionsgranulat zum Adsorbieren von z.B. Phosphaten und/oder Arsen eingerichtet sein. Geeignete Adsorptionsgranulate für die verschiedensten Anwendungsfälle sind aus dem Stand der Technik bekannt und können von einem Fachmann nach Bedarf ausgewählt werden.

Im Folgenden wird die Erfindung anhand von Ausführungsbeispielen näher beschrieben. Die Zeichnungen zeigen in
- Figur 1: einen schematischen Längsschnitt durch eine erste Ausführungsform einer Filtervorrichtung, die nicht erfindungsgemäß ist, und
- Figur 2: einen schematischen Längsschnitt durch eine zweite Ausführungsform einer erfindungsgemäßen Filtervorrichtung in Teilansicht.

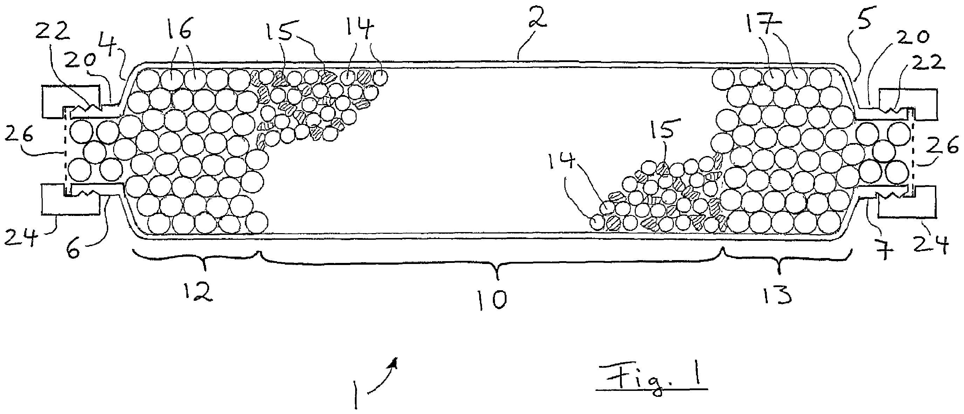

Eine erste nicht erfindungsgemäße Ausführungsform einer Filtervorrichtung ist als Filterpatrone 1 ausgestaltet und in Figur 1 in einem schematischen Längsschnitt dargestellt.

Die Filterpatrone 1 weist ein Gehäuse 2 mit einer Stirnseite 4 und einer gegenüberliegenden Stirnseite 5 auf. An der Stirnseite 4 befindet sich ein Einlass 6, an der Stirnseite 5 ein Auslass 7.

Das Gehäuse 2 ist in Längsrichtung in mehrere Zonen aufgeteilt, die aber untereinander nicht durch irgendwelche Trennwände oder Siebe voneinander separiert sind. Im Ausführungsbeispiel sind dies drei Zonen, und zwar im zentralen Bereich des Gehäuses 2 ein Adsorptionsabschnitt 10, zwischen dem Einlass 6 und dem Adsorptionsabschnitt 10 ein Einlassabschnitt 12 und zwischen dem Adsorptionsabschnitt 10 und dem Auslass 7 ein Auslassabschnitt 13.

Der Adsorptionsabschnitt 10 ist mit Glaskugeln 14 und einem Adsorptionsgranulat 15 gefüllt, was in den Figuren nur in Teilbereichen eingezeichnet ist. Die Glaskugeln 14 haben alle einen vorgegebenen, gleichen Nenndurchmesser.

Geeignete Glaskugeln, deren Durchmesser z.B. um ±5% oder um ±10% gegenüber dem Nenndurchmesser schwankt, sind kommerziell erhältlich. Im Ausführungsbeispiel haben die Glaskugeln 14 einen Nenndurchmesser von 3 mm.

Die Korngröße des Adsorptionsgranulats 15 ist im Ausführungsbeispiel durch Siebung auf einen Bereich von 0,5 mm bis 4 mm eingestellt. Die größten Granulatkörner sind also etwas größer als die Glaskugeln 14. In Figur 1 sind der Übersichtlichkeit halber nur Granulatkörner eingezeichnet, die etwa so groß sind wie die Glaskugeln 14.

Im Adsorptionsabschnitt 10 sind die Glaskugeln 14 und das Adsorptionsgranulat 15 weitgehend gleichmäßig durchmischt. Da die Größe der Granulatkörner nach unten begrenzt ist, sind keine sehr kleinen Teilchen vorhanden, die die Zwischenräume zwischen den Glaskugeln 14 und den Granulatkörnern zusetzen könnten. Daher ist der Strömungswiderstand des Adsorptionsabschnitts 10 relativ gering. Die Glaskugeln 14 und das Adsorptionsgranulat 15 fixieren sich im Wesentlichen gegenseitig, wobei die Oberflächen der Granulatkörner von einer durch den Adsorptionsabschnitt 10 strömenden Flüssigkeit gut erreicht werden, was die Wirksamkeit der Filterpatrone 1 erhöht.

Das Adsorptionsgranulat 15 ist zum Adsorbieren bestimmter Stoffe (z.B. Phosphate oder Arsen) eingerichtet, die so aus dem durch die Filterpatrone 1 strömenden Medium entfernt werden. Als Adsorptionsgranulat können zahlreiche Substanzen verwendet werden, auch Mischungen verschiedener Substanzen. Dabei können zu entfernende Stoffe an der äußeren Oberfläche oder auch in Poren im Volumen der Granulatkörner aufgenommen werden. Außer über Physisorption können die Granulatkörner auch ausschließlich oder zusätzlich über Chemisorption wirken. Die zahlreichen Möglichkeiten für die Auswahl des Adsorptionsgranulats 15 sind nicht Gegenstand dieser Anmeldung.

In dem Einlassabschnitt 12 befinden sich Glaskugeln 16, deren Nenndurchmesser im Ausführungsbeispiel größer ist als der der Glaskugeln 14 und 5 mm beträgt. Der Auslassabschnitt 13 enthält analog Glaskugeln 17, deren Nenndurchmesser im Ausführungsbeispiel ebenfalls größer ist als der Nenndurchmesser der Glaskugeln 14 und gleich dem der Glaskugeln 16 ist. Die Zwischenräume zwischen den Glaskugeln 16 und zwischen den Glaskugeln 17 sind so klein, dass die Glaskugeln 14 nicht in den Einlassabschnitt 12 bzw. den Auslassabschnitt 13 gelangen können. Wegen der weitgehenden Immobilisierung der Granulatkörner des Adsorptionsgranulats 15 durch die Glaskugeln 14 treten ferner nur unbedeutende Mengen an Adsorptionsgranulat in den Einlassabschnitt 12 und den Auslassabschnitt 13 über. Andererseits sind die Zwischenräume zwischen den Glaskugeln 16 und 17 wegen der Größe der Glaskugeln 16, 17 so groß, dass der Strömungswiderstand des Einlassabschnitts 12 bzw. des Auslassabschnitts 13 relativ gering ist.

Der Einlass 6 weist einen Stutzen 20 mit einem Außengewinde 22 (z.B. einem üblichen 1"-, 3/4"- oder 1/2"-Gewinde) auf. Auf das Außengewinde 22 ist eine Überwurfmutter 24 aufgeschraubt, in die eine Siebdichtung 26 eingelassen ist. Am Auslass 7 befindet sich eine gleichartige Anordnung, weshalb dafür die gleichen Bezugszeichen verwendet sind. Die Maschen bzw. Löcher der Siebdichtungen 26 können relativ groß sein, erlauben aber keinen Durchtritt der Glaskugeln 16 bzw. 17. Andere Ausgestaltungen für den Einlass 6 und den Auslass 7 sind ebenfalls denkbar, zum Beispiel mit zusätzlichen Gewinden zum Einbau in eine bestehende Installation.

Der Adsorptionsabschnitt 10, der Einlassabschnitt 12 und der Auslassabschnitt 13 sind verdichtet gefüllt. Damit ist gemeint, dass die einzelnen Glaskugeln 14, 16 und 17 und die Granulatkörner des Adsorptionsgranulats 15 nur geringe Bewegungsmöglichkeiten haben, so dass keine nennenswerte Durchmischung zwischen dem Inhalt des Einlassabschnitts 12 bzw. des Auslassabschnitts 13 mit dem des Adsorptionsabschnitts 10 stattfindet. Dies lässt sich zum Beispiel durch Rütteln beim Einfüllen erreichen. Um eine für die Praxis ausreichende Verdichtung zu erzielen, ist jedoch keine dichte Kugelpackung erforderlich, was im Adsorptionsabschnitt 10 wegen der unregelmäßigen Form der Granulatkörner ohnehin nicht möglich wäre. Ein ausreichend dichter Zustand kann mit Hilfe der Überwurfmuttern 24 stabilisiert werden. Beim Festschrauben der Überwurfmuttern 24 kann sogar etwas Druck ausgeübt werden, falls die Glaskugeln 16 und 17 nach dem Einfüllen zunächst etwas an dem Einlass 6 bzw. dem Auslass 7 vorstehen.

Wenn die Filterpatrone 1 von einem Medium (z.B. Wasser, aus dem Schadstoffe entfernt werden sollen) durchströmt wird, gelangt das Medium über den Einlass 6 in den Einlassabschnitt 12, wo es durch viele Kanäle zwischen den Glaskugeln 16 strömen kann und somit weitgehend gleichmäßig über den Querschnitt des Gehäuses 2 verteilt wird. Danach durchdringt das Medium den Adsorptionsabschnitt 10, wo die Granulatkörner des Adsorptionsgranulats 15 Schadstoffe aus dem Medium aufnehmen können. Danach durchströmt das Medium die Glaskugeln 17 des Auslassabschnitts 13, von wo aus es strömungsgünstig zu dem Auslass 7 geleitet wird.

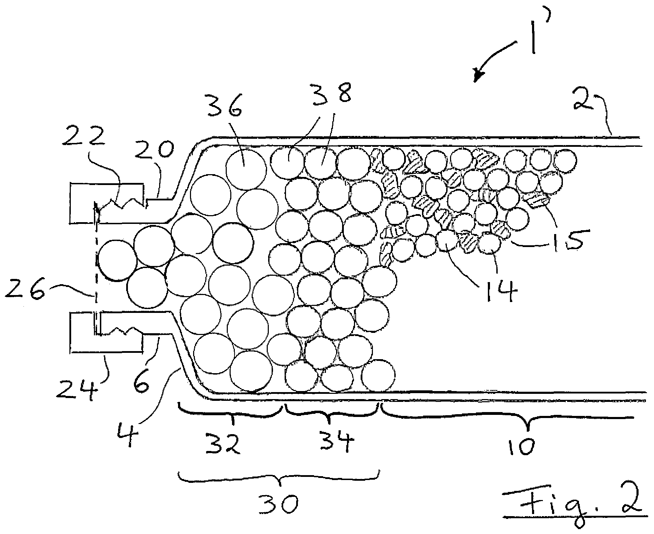

Die Figur 2 zeigt eine Teilansicht eines schematischen Längsschnitts durch eine zweite Ausführungsform einer Filterpatrone, die hier mit 1' bezeichnet ist. Ansonsten sind in Figur 2 für einander entsprechende Teile dieselben Bezugszeichen verwendet wie in Figur 1. Figur 2 zeigt eine erfindungsgemäße Filtervorrichtung.

Bei der Ausführungsform gemäß Figur 2 hat der mit 30 bezeichnete Einlassabschnitt zwei Unterabschnitte, und zwar einen ersten Unterabschnitt 32 und einen zweiten Unterabschnitt 34 mit Glaskugeln 36 bzw. 38. Der Nenndurchmesser der Glaskugeln 38 ist im Ausführungsbeispiel größer als der der Glaskugeln 14 und kleiner als der der Glaskugeln 36. Die Unterschiede im Nenndurchmesser sind aber nicht so groß, dass sich die Glaskugeln benachbarter Unterabschnitte bzw. Abschnitte untereinander mischen könnten. Im Ausführungsbeispiel gemäß Figur 2 haben die Glaskugeln im Adsorptionsabschnitt einen Nenndurchmesser von 3 mm, die Glaskugeln 38 einen Nenndurchmesser von 5 mm und die Glaskugeln 36 einen Nenndurchmesser von 10 mm. Der in Figur 2 nicht dargestellte Auslassabschnitt der Filterpatrone 1' ist analog zu dem Einlassabschnitt 30 aufgebaut, also ebenfalls mit zwei Schichten mit Glaskugeln von 5 mm bzw. 10 mm Nenndurchmesser, wobei letztere in der dem Auslass nahen Schicht angeordnet sind.

In der Ausführungsform gemäß Figur 2 enthält der Adsorptionsabschnitt 10 ein Adsorptionsgranulat mit einer Korngröße von 0,5 mm bis 4 mm (in Figur 2 nicht genau eingezeichnet).

In einem weiteren Ausführungsbeispiel haben der Einlassabschnitt und der Auslassabschnitt jeweils drei Unterabschnitte, jeweils mit Glaskugeln von 10 mm, 5 mm und 3 mm Durchmesser, wobei der Adsorptionsabschnitt Glaskugeln von 3 mm Durchmesser mit einem Adsorptionsgranulat einer Korngröße im Bereich von 0,5 mm bis 4 mm enthält.

Ein mehrschichtiger Aufbau des Einlassabschnitts bzw. des Auslassabschnitts kann zu einer Verbesserung des Strömungsverhaltens in der Filterpatrone sorgen, also insbesondere einer Verringerung des gesamten Strömungswiderstands der Filterpatrone, und zu einer möglichst gleichmäßigen Verteilung der zu reinigenden Flüssigkeit über den Querschnitt des Adsorptionsabschnitts.

Die Filterpatrone lässt sich zum Beispiel zum Reduzieren unerwünschter Verbindungen, z.B. von Phosphaten, in Teichen, Naturbädern, Spring- und Kreislaufbrunnen verwenden. Bei stehenden oder abgeschlossenen Gewässern kann die Filterpatrone in einem Kreislauf benutzt werden, wobei ständig Wasser umgepumpt wird. Dabei kann das Wasser vollständig durch die Filterpatrone fließen, es kann aber auch ein Bypass zum Einsatz kommen. Ferner können mehrere Filterpatronen in Reihe oder auch parallel geschaltet werden. Es gibt viele Einsatzmöglichkeiten.

## Patentansprüche

1. Filtervorrichtung, mit einem Einlass (6), einem Auslass (7) und einem Strömungsweg zwischen dem Einlass (6) und dem Auslass (7), wobei der Strömungsweg, in Strömungsrichtung gesehen, einen ersten Abschnitt (12; 30), einen zweiten Abschnitt (10) und einen dritten Abschnitt (13) aufweist, wobei
- der erste Abschnitt (12; 30) ausschließlich Glaskugeln (16; 36, 38) enthält und
- der dritte Abschnitt (13) ausschließlich Glaskugeln (17) enthält,
**dadurch gekennzeichnet, dass** der zweite Abschnitt (10) ein Gemisch mit Glaskugeln (14) und einem Adsorptionsgranulat (15) enthält und
**dadurch gekennzeichnet, dass** (i) der erste Abschnitt (30) mindestens zwei mit Glaskugeln (36, 38) gefüllte Unterabschnitte (32, 34) aufweist, wobei der Nenndurchmesser der Glaskugeln (36, 38) in einem jeweiligen Unterabschnitt (32, 34) gleich groß ist und wobei der Nenndurchmesser der Glaskugeln (36, 38) der einzelnen Unterabschnitte (32, 34) in Richtung auf den Einlass (6) zu ansteigt, und/oder (ii) der dritte Abschnitt (13) mindestens zwei mit Glaskugeln gefüllte Unterabschnitte aufweist, wobei der Nenndurchmesser der Glaskugeln in einem jeweiligen Unterabschnitt gleich groß ist und wobei der Nenndurchmesser der Glaskugeln der einzelnen Unterabschnitte in Richtung auf den Auslass (7) zu ansteigt.

2. Filtervorrichtung nach Anspruch 1, **dadurch gekennzeichnet, dass** der erste Abschnitt (12; 30) und der dritte Abschnitt (13) mit Glaskugeln (16, 17; 36, 38) gefüllt sind, deren Nenndurchmesser mindestens so groß ist wie der Nenndurchmesser der größten Glaskugeln (14) in dem zweiten Abschnitt (10).

3. Filtervorrichtung nach Anspruch 2, **dadurch gekennzeichnet, dass** die Glaskugeln (14) in dem zweiten Abschnitt (10) gleichen Nenndurchmesser haben.

4. Filtervorrichtung nach einem der Ansprüche 1 bis 3, **dadurch gekennzeichnet, dass** der zweite Abschnitt (10) an den ersten Abschnitt (12; 30) und der dritte Abschnitt (13) an den zweiten Abschnitt (10) angrenzt.

5. Filtervorrichtung nach einem der Ansprüche 1 bis 4, **gekennzeichnet durch** mindestens eines der folgenden Merkmale: die Korngröße des Adsorptionsgranulats (15) entspricht dem Nenndurchmesser der Glaskugeln (14) in dem zweiten Abschnitt (10); die Korngröße des Adsorptionsgranulats (15) ist nach oben durch den größten Nenndurchmesser der Glaskugeln (14) in dem zweiten Abschnitt (10) begrenzt; die Korngröße des Adsorptionsgranulats (15) ist nach oben nicht durch den Nenndurchmesser der Glaskugeln (14) in dem zweiten Abschnitt (10) begrenzt; die kleinste Korngröße des Adsorptionsgranulats (15) liegt im Bereich von 0,1 mm bis 2,0 mm; die Korngröße des Adsorptionsgranulats (15) ist nach unten durch 0,05 mm, 0,1 mm, 0,2 mm, 0,3 mm, 0,4 mm, 0,5 mm, 0,6 mm, 0,7 mm, 0,8 mm, 0,9 mm, 1,0 mm, 1,1 mm, 1,2 mm, 1,3 mm, 1,4 mm, 1,5 mm, 1,6 mm, 1,7 mm, 1,8 mm, 1,9 mm oder 2,0 mm begrenzt; der Nenndurchmesser der Glaskugeln (14) im zweiten Abschnitt (10) liegt im Bereich von 0,1 mm bis 8 mm; der Nenndurchmesser der Glaskugeln (16, 17; 36, 38) im ersten (12; 30) und im dritten (13) Abschnitt liegt im Bereich von 0.2 mm bis 20 mm.

6. Filtervorrichtung nach einem der Ansprüche 1 bis 5, **dadurch gekennzeichnet, dass** die Korngröße des Adsorptionsgranulats (15) durch Siebung festgelegt ist.

7. Filtervorrichtung nach einem der Ansprüche 1 bis 6, **dadurch gekennzeichnet, dass** der erste Abschnitt (12), der zweite Abschnitt (10) und der dritte Abschnitt (13) verdichtet gefüllt sind, wobei deren Füllungen durch Begrenzungsmittel (24, 26) am Einlass (6) und am Auslass (7) in verdichtetem Zustand gehalten werden.

8. Filtervorrichtung nach Anspruch 7, **dadurch gekennzeichnet, dass** am Einlass (6) und/oder am Auslass (7) als Begrenzungsmittel eine Überwurfmutter (24) mit einem Siebeinsatz (26) vorgesehen ist.

9. Filtervorrichtung nach einem der Ansprüche 1 bis 8, **dadurch gekennzeichnet, dass** die Länge des zweiten Abschnitts (10) größer ist als die Summe der Längen des ersten Abschnitts (12; 30) und des dritten Abschnitts (13), wobei die Längen in Richtung des Strömungswegs gemessen sind.

10. Filtervorrichtung nach einem der Ansprüche 1 bis 9, **gekennzeichnet durch** ein Gehäuse (2), an dem der Einlass (6) und der Auslass (7) angebracht sind.

11. Filtervorrichtung nach Anspruch 10, **dadurch gekennzeichnet, dass** das Gehäuse (2) patronenartig mit zwei gegenüberliegenden Stirnseiten (4, 5) ausgestaltet ist, wobei an der einen Stirnseite (4) der Einlass (6) und an der anderen Stirnseite (5) der Auslass (7) angeordnet ist.

12. Filtervorrichtung nach Anspruch 11, **dadurch gekennzeichnet, dass** sich der zweite Abschnitt (10) über 2/3, der erste Abschnitt (12; 30) über 1/6 und der dritte Abschnitt (13) über 1/6 der Länge des Gehäuses (2) erstreckt.

13. Filtervorrichtung nach einem der Ansprüche 1 bis 12, **dadurch gekennzeichnet, dass** das Adsorptionsgranulat (15) zum Adsorbieren mindestens einer der folgenden Substanzen eingerichtet ist: Phosphat, Arsen.

## Claims

1. A filter device, comprising an inlet (6), an outlet (7), and a flow path between the inlet (6) and the outlet (7), wherein the flow path, viewed in the flow direction, has a first section (12; 30), a second section (10), and a third section (13), wherein
- the first section (12; 30) exclusively contains glass beads (16; 36, 38), and
- the third section (13) exclusively contains glass beads (17),
**characterized in that** the second section (10) contains a mixture comprising glass beads (14) and an adsorption granulate (15), and
**characterized in that** (i) the first section (30) has at least two subsections (32, 34) filled with glass beads (36, 38), wherein the nominal diameter of the glass beads (36, 38) in a respective subsection (32, 34) is equal and wherein the nominal diameter of the glass beads (36, 38) of the individual subsections (32, 34) increases in the direction toward the inlet (6), and/or (ii) wherein the third section has at least two subsections filled with glass beads, wherein the nominal diameter of the glass beads in a respective subsection is equal and wherein the nominal diameter of the glass beads of the individual subsections increases in the direction toward the outlet (7).

2. The filter device as claimed in claim 1, **characterized in that** the first section (12; 30) and the third section (13) are filled with glass beads (16, 17; 36, 38), the nominal diameter of which is at least as large as that of the nominal diameter of the largest glass beads (14) in the second section (10).

3. The filter device as claimed in claim 2, **characterized in that** the glass beads (14) in the second section (10) have equal nominal diameter.

4. The filter device as claimed in any one of claims 1 to 3, **characterized in that** the second section (10) adjoins the first section (12; 30) and the third section (13) adjoins the second section (10).

5. The filter device as claimed in any one of claims 1 to 4, **characterized by** at least one of the following features: the grain size of the adsorption granulate (15) corresponds to the nominal diameter of the glass beads (14) in the second section (10); the grain size of the adsorption granulate (15) is delimited at the upper end by the largest nominal diameter of the glass beads (14) in the second section (10); the grain size of the adsorption granulate (15) is not delimited at the upper end by the nominal diameter of the glass beads (14) in the second section (10); the smallest grain size of the adsorption granulate (15) is in the range of 0.1 mm to 2.0 mm; the grain size of the adsorption granulate (15) is delimited at the lower end by 0.05 mm, 0.1 mm, 0.2 mm, 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm, or 2.0 mm; the nominal diameter of the glass beads (14) in the second section (10) is in the range of 0.1 mm to 8 mm; the nominal diameter of the glass beads (16, 17; 36, 38) in the first (12; 30) and in the third (13) section is in the range of 0.2 mm to 20 mm.

6. The filter device as claimed in any one of claims 1 to 5, **characterized in that** the grain size of the adsorption granulate (15) is established by screening.

7. The filter device as claimed in any one of claims 1 to 6, **characterized in that** the first section (12), the second section (10), and the third section (13) are filled in a compacted manner, wherein the fillings thereof are kept in the compacted state by delimitation means (24, 26) at the inlet (6) and at the outlet (7).

8. The filter device as claimed in claim 7, **characterized in that** a union nut (24) having a screen insert (26) is provided at the inlet (6) and/or at the outlet (7) as the delimitation means.

9. The filter device as claimed in any one of claims 1 to 8, **characterized in that** the length of the second section (10) is greater than the total of the lengths of the first section (12; 30) and the third section (13), wherein the lengths are measured in the direction of the flow path.

10. The filter device as claimed in any one of claims 1 to 9, **characterized by** a housing (2), on which the inlet (6) and the outlet (7) are attached.

11. The filter device as claimed in claim 10, **characterized in that** the housing (2) is designed like a cartridge having two opposing end faces (4, 5), wherein the inlet (6) is arranged on one end face (4) and the outlet (7) is arranged on the other end face (5).

12. The filter device as claimed in claim 11, **characterized in that** the second section (10) extends over 2/3, the first section (12; 30) over 1/6, and the third section (13) over 1/6 of the length of the housing (2).

13. The filter device as claimed in any one of claims 1 to 12, **characterized in that** the adsorption granulate (15) is configured to adsorb at least one of the following substances: phosphate, arsenic.

## Revendications

1. Dispositif de filtration avec une entrée (6), une sortie (7) et une voie d'écoulement entre l'entrée (6) et la sortie (7), dans lequel la voie d'écoulement, vue dans le sens d'écoulement, présente une première section (12 ; 30), une deuxième section (10) et une troisième section (13), dans lequel
- la première section (12 ; 30) contient exclusivement des billes de verre (16 ; 36, 38) et
- la troisième section (13) contient exclusivement des billes de verre (17),
**caractérisé en ce que** la deuxième section (10) contient un mélange de billes de verre (14) et de granulés d'adsorption (15) et
**caractérisé en ce que** (i) la première section (30) présente au moins deux sections inférieures (32, 34) remplies de billes de verre (36, 38), dans lequel le diamètre nominal des billes de verre (36, 38) dans une section inférieure (32, 34) respective est identique et dans lequel le diamètre nominal des billes de verre (36, 38) des sections inférieures (32, 34) individuelles augmente en direction de l'entrée (6) et/ou (ii) la troisième section (13) présente au moins deux sections inférieures remplies de billes de verre, dans lequel le diamètre nominal des billes de verre dans une section inférieure respective est identique et dans lequel le diamètre nominal des billes de verre des sections inférieures individuelles augmente en direction de la sortie (7).

2. Dispositif de filtration selon la revendication 1, **caractérisé en ce que** la première section (12 ; 30) et la troisième section (13) sont remplies de billes de verre (16, 17 ; 36, 38), dont le diamètre nominal est au moins aussi grand que le diamètre nominal des plus grandes billes de verre (14) dans la deuxième section (10).

3. Dispositif de filtration selon la revendication 2, **caractérisé en ce que** les billes de verre (14) dans la deuxième section (10) présentent le même diamètre nominal.

4. Dispositif de filtration selon l'une quelconque des revendications 1 à 3, **caractérisé en ce que** la deuxième section (10) est contiguë à la première section (12 ; 30) et la troisième section (13) à la deuxième section (10).

5. Dispositif de filtration selon l'une quelconque des revendications 1 à 4, **caractérisé par** au moins une des caractéristiques suivantes : la grosseur du grain des granulés d'adsorption (15) correspond au diamètre nominal des billes de verre (14) dans la deuxième section (10) ; la grosseur du grain des granulés d'adsorption (15) est limitée vers le haut par le plus grand diamètre nominal des billes de verre (14) dans la deuxième section (10) ; la grosseur du grain des granulés d'adsorption (15) n'est pas limitée vers le haut par le diamètre nominal des billes de verre (14) dans la deuxième section (10) ; la plus petite grosseur du grain des granulés d'adsorption (15) se trouve dans la plage de 0,1 mm à 2,0 mm ; la grosseur du grain des granulés d'adsorption (15) est limitée vers le bas par 0,05 mm, 0,1 mm, 0,2 mm, 0,3 mm, 0,4 mm, 0,5 mm, 0,6 mm, 0,7 mm, 0,8 mm, 0,9 mm, 1,0 mm, 1,1 mm, 1,2 mm, 1,3 mm, 1,4 mm, 1,5 mm, 1,6 mm, 1,7 mm, 1,8 mm, 1,9 mm ou 2,0 mm ; le diamètre nominal des billes de verre (14) dans la deuxième section (10) se trouve dans la plage de 0,1 mm à 8 mm ; le diamètre nominal des billes de verre (16, 17 ; 36, 38) dans la première (12 ; 30) et dans la troisième (13) section se trouve dans la plage de 0,2 mm à 20 mm.

6. Dispositif de filtration selon l'une quelconque des revendications 1 à 5, **caractérisé en ce que** la grosseur du grain des granulés d'adsorption (15) est fixée par tamisage.

7. Dispositif de filtration selon l'une quelconque des revendications 1 à 6, **caractérisé en ce que** la première section (12), la deuxième section (10) et la troisième section (13) sont remplies de manière compressée, dans lequel leurs remplissages sont maintenus par des moyens de limitation (24, 26) au niveau de l'entrée (6) et au niveau de la sortie (7) dans l'état compressé.

8. Dispositif de filtration selon la revendication 7, **caractérisé en ce qu'**un écrou-raccord (24) est prévu avec une plaque-filtre (26) au niveau de l'entrée (6) et/ou au niveau de la sortie (7) comme moyen de limitation.

9. Dispositif de filtration selon l'une quelconque des revendications 1 à 8, **caractérisé en ce que** la longueur de la deuxième section (10) est plus grande que la somme des longueurs de la première section (12 ; 30) et de la troisième section (13), dans lequel les longueurs sont mesurées en direction de la voie d'écoulement.

10. Dispositif de filtration selon l'une quelconque des revendications 1 à 9, **caractérisé par** un boîtier (2), au niveau duquel l'entrée (6) et la sortie (7) sont montées.

11. Dispositif de filtration selon la revendication 10, **caractérisé en ce que** le boîtier (2) est configuré comme une cartouche avec deux côtés frontaux (4, 5) opposés, dans lequel l'entrée (6) est agencée sur l'un côté frontal (4) et la sortie (7) est agencée sur l'autre côté frontal (5).

12. Dispositif de filtration selon la revendication 11, **caractérisé en ce que** la deuxième section (10) s'étend sur 2/3, la première section (12 ; 30) sur 1/6 et la troisième section (13) sur 1/6 de la longueur du boîtier (2).

13. Dispositif de filtration selon l'une quelconque des revendications 1 à 12, **caractérisé en ce que** les granulés d'adsorption (15) sont conçus pour l'adsorption d'au moins une des substances suivantes : phosphate, arsenic.
